# EUROPEAN PATENT APPLICATION

(11) **EP 1 770 583 A2**
(43) Date of publication of application: **04.04.2007**
(21) Application number: 06016151.0
(22) Date of filing: 02.08.2006
(51) Int. Cl.: G06F 21/04

(54) **Apparatus and method for protecting access to some functions of a multi-function device**

(30) Priority: 12.09.2005 JP 2005263654
(71) Applicant: MURATA KIKAI KABUSHIKI KAISHA, Kyoto (JP)
(72) Inventor: Dokuni, Kenji, c/o Murata Kikai Kabushiki Kaisha, Kyoto, 612-8686 (JP); Kanou, Masayuki, c/o Murata Kikai Kabushiki Kaisha, Kyoto, 612-8686 (JP)
(74) Representative: Kirschner, Klaus Dieter

(57) **Abstract**

An authentication unit of a digital MFP carries out communication with an authentication server and executes an authentication procedure. The authentication unit acquires authentication information from an operator, transmits an authentication request including the authentication information to the authentication server, and receives an authentication result from the authentication server. A determination unit determines whether or not to permit offering of a function called by an operation performed on an operation unit. A flash memory stores a network authentication setting designating necessity or non-necessity of the authentication procedure for each function in a manner that the network authentication setting may be edited. When a function designated in the network authentication setting as a function requiring the authentication procedure is called, the authentication unit executes the authentication procedure. After the authentication succeeds, the determination unit permits to offer the called function.

## Description

### BACKGROUND OF THE INVENTION

### 1. Field of the Invention

The present invention relates to a processing device which offers a plurality of functions.

### 2. Description of the Related Art

A processing device including a plurality of functions is configured to offer a function called by an operation. An example of such a processing device is a digital Multi Function Peripheral (MFP). For example, in a typical digital MFP, when a function switching key on an operation panel is operated, one of a copy function, a fax function, a scanner function and a printer function is called, and the called function becomes usable.

Meanwhile, in the processing device including a plurality of functions, there are cases in which each function is desirably permitted to be offered to only a previously permitted operator. For example, in the digital MFP, there are cases in which each function of the copy function, the fax function, the scanner function and the printer function is desirably permitted to only a previously permitted operator.

To respond to such a request, a document distribution server, which is remotely located from the digital MFP (a multifunction device), stores a device management table including information relating to whether or not to permit to offer each function. The digital MFP permits to offer each function to only a previously permitted operator.

However, according to the conventional digital MFP, an authentication procedure is required even when calling a function having a low level of necessity of the authentication procedure. Thus, it was extremely troublesome. For example, in the digital MFP, the fax function using a telephone line may be desirably permitted to be offered to only a previously permitted operator. Meanwhile, with regard to the remaining copy function, the scanner function and the printer function, even when it is not necessary to impose restriction, the conventional digital MFP requires the authentication procedure each time when calling the copy function, the scanner function or the printer function.

### SUMMARY OF THE INVENTION

In order to overcome the problems described above, preferred embodiments of the present invention provide a processing device, such as a digital MFP, which can appropriately set a function requiring an authentication procedure.

According to a preferred aspect of the present invention, a processing device having a plurality of functions includes an operation unit, a determination unit, an authentication unit, and a storage unit. An operation may be performed from the operation unit. The determination unit determines whether or not to permit to offer a function called by an operation performed from the operation unit. The authentication unit executes an authentication procedure by acquiring authentication information from an operator, transmitting an authentication request including the authentication information to an authentication device, and receiving an authentication result for the authentication request from the authentication device. The storage unit stores authentication necessity/non-necessity information designating necessity or non-necessity of an authentication procedure for each function in an editable form. When a function designated in the authentication necessity/non-necessity information as a function requiring the authentication information is called, the authentication unit executes the authentication procedure. After an authentication succeeds, the determination unit permits to offer the called function.

According to another preferred aspect of the present invention, for editing the authentication necessity/non-necessity information, the authentication unit executes the authentication procedure. After the authentication succeeds, the authentication necessity/non-necessity information becomes editable.

According to another preferred aspect of the present invention, an operator who can edit the authentication necessity/non-necessity information may be limited to a specific operator.

According to another preferred aspect of the present invention, the processing device also includes a display unit arranged to display information in a visible form. The display unit displays a list of functions which necessity or non-necessity of the authentication procedure is designated by the authentication necessity/non-necessity information. The processing device selects one of the displayed functions, and switches a designation of necessity or non-necessity of the authentication procedure for the selected function.

According to another preferred aspect of the present invention, after the authentication succeeds, until a procedure is carried out for terminating a state in which the authentication has succeeded, the determination unit permits to offer the called function without having the authentication procedure being executed by the authentication unit.

According to another preferred aspect of the present invention, after the authentication succeeds, when a function designated in the authentication necessity/non-necessity information as a function requiring the authentication procedure is called, the authentication unit executes the authentication procedure. After the authentication succeeds, the determination unit permits to offer the called function.

According to the above-described preferred aspect, by appropriately editing the authentication necessity/non-necessity information, a function requiring the authentication procedure may be set appropriately.

Since the processing device stores the authentication necessity/non-necessity information, a function requiring the authentication information may be varied for each processing device.

Since the processing device stores the authentication necessity/non-necessity information, the authentication necessity/non-necessity information is not required to be transmitted and received between the processing device and the authentication device each time when a function is called. The authentication device may just specify necessity or non-necessity of the authentication for the authentication request including the authentication information. That is, it is possible to realize a device which imposes a small load on a remote device for the authentication.

By enabling the authentication necessity/non-necessity information to be edited after the authentication succeeds, it is possible to prevent contents of the authentication necessity/non-necessity information from being edited by an inappropriate operator. In particular, when only a specific operator is permitted to edit the contents of the authentication necessity/non-necessity information, an inappropriate editing may be prevented even more efficiently.

By selecting one of the displayed functions and enabling to switch the designation of necessity or non-necessity of the authentication procedure, the authentication necessity/non-necessity information may be edited easily.

After the authentication succeeds, until a procedure is carried out to terminate the state in which the authentication has succeeded, the called function is permitted to be offered without the authentication procedure being executed again. Accordingly, the authentication information is not required to be provided to the processing device each time when calling the function designated in the authentication necessity/non-necessity information as the function requiring the authentication procedure. Accordingly, it is possible to avoid troublesome.

After the authentication succeeds, when the function designated in the authentication necessity/non-necessity information as the function requiring the authentication procedure is called, the authentication procedure is executed. Then, after the authentication succeeds, the called function is permitted to be offered. Accordingly, it is possible to reliably prevent the function requiring the authentication procedure from being offered to an operator other than an operator who has acquired the authentication information.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a block diagram illustrating an overall configuration of an image processing system including digital MFPs according to a preferred embodiment of the present invention.

Fig. 2 illustrates a communication protocol between a digital MFP and an authentication server when carrying out an authentication process and an option process.

Fig. 3 is a block diagram illustrating a configuration of the digital MFP according to a preferred embodiment of the present invention.

Fig. 4 is a block diagram illustrating a configuration of the digital MFP relating to restriction on offering of a function.

Fig. 5 illustrates a network authentication setting list screen and a setting changing screen called to a display unit when the digital MFP is switched to a network authentication setting changing mode.

Fig. 6 is a flowchart illustrating an operation of the digital MFP relating to the restriction on offering a function.

### DETAILED DESCRIPTION OF PREFERRED EMBODIMENTS

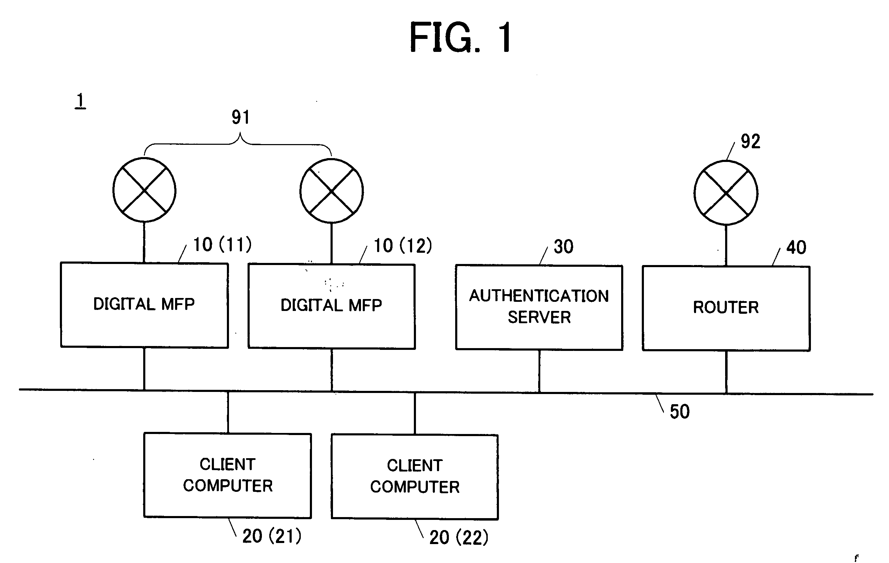

(1. Entire Configuration of Image Processing System) Fig. 1 is a block diagram illustrating an overall configuration of an image processing system 1 including digital MFPs 10 (11 and 12) according to a preferred embodiment of the present invention.

Referring to Fig. 1, the image processing system 1 includes the digital MFPs 10 (11 and 12), client computers 20 (21 and 22) and an authentication server 30. In the following description, when it is necessary to distinguish the two digital MFPs, the reference numerals 11 and 12 will be used. When it is not necessary to distinguish the digital MFPs, a common reference numeral 10 will be used. In the same manner, when it is necessary to distinguish the two client computers, the reference numerals 21 and 22 will be used. When it is not necessary to distinguish the client computers, a common reference numeral 20 will be used.

The digital MFPs 10, the client computers 20 and the authentication server 30 are connected to a Local Area Network (LAN) 50 to enable communication to be carried out between one another. The digital MFPs 10 are also connected to a Public Switched Telephone Networks (PSTN) 91. The LAN 50 is connected to a remote network such as the Internet 92 via a network apparatus such as a router 40.

The digital MFPs 10 include a copy mode, a fax mode, a scanner mode and a printer mode. The digital MFPs 10 serve as a core processing device including a plurality of functions in the image processing system 1.

The client computers 20 are generally a personal computer.

The authentication server 30 is a server computer that provides a directory service such as a Lightweight Directory Access Protocol (LDAP) service.

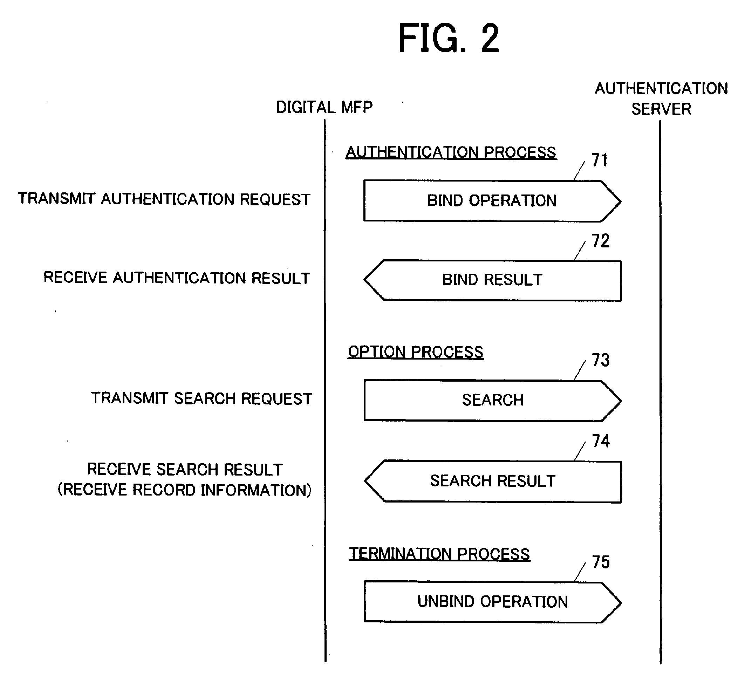

Provided that the authentication server 30 is an LDAP server, with reference to Fig. 2, a description will be made of a communication protocol between the digital MFP 10 and the authentication server 30 when carrying out an authentication process and an option process.

In case of an authentication process, first, a BIND operation 71 is carried out from the digital MFP 10 to the authentication server 30. In response to the BIND operation 71, the authentication server 30 returns a BIND result 72 to the digital MFP 10. In the BIND operation 71, the digital MFP 10 transmits a user ID and a password, i.e. authentication information, to the authentication server 30. When the user ID and the password are appropriate, the authentication server 30 returns "true" to the digital MFP 10 to permit binding of the digital MFP 10. When the user ID and the password are inappropriate, the authentication server 30 returns "false" to the digital MFP 10 not to permit the binding of the digital MFP 10. That is, the BIND operation 71 is an authentication request from the digital MFP 10 to the authentication server 30. The BIND result 72 (BIND permission/rejection) is an authentication result with respect to the authentication request.

Following the authentication process, an additionally executable option process is executed between the digital MFP 10 and the authentication server 30. In the option process, the digital MFP 10 transmits a search request (SEARCH) 73 to the authentication server 30, and in response to the search request 73, the authentication server 30 returns a search result 74 including record information to the digital MFP 10. The option process may be executed only once or may be executed twice or more.

After the authentication process and the option process, an UNBIND operation 75 is carried out from the digital MFP 10 to the authentication server 30, and a series of communication protocol between the digital MFP 10 and the authentication server 30 ends.

The authentication server 30 can also carry out the authentication process and the option process with the client computer 20, not only with the digital MFP 10, by the same communication protocol.

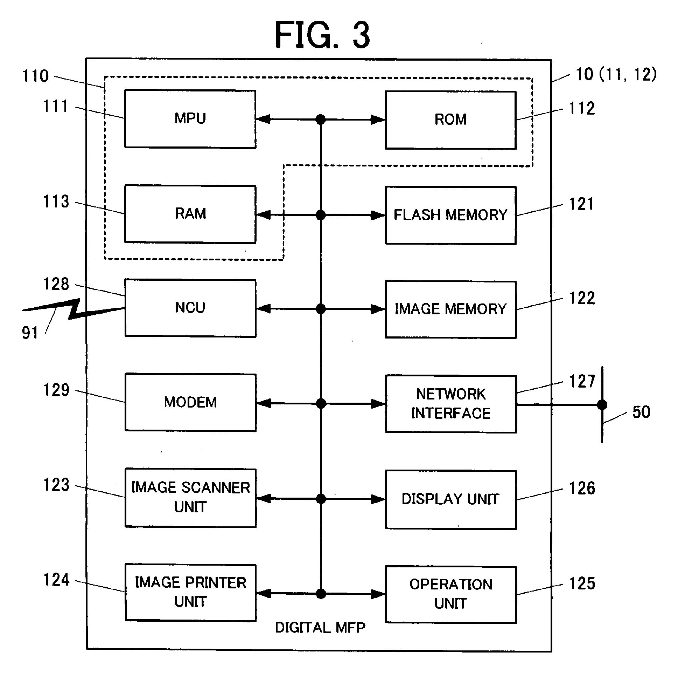

(2. Configuration of Digital MFP) Fig. 3 is a block diagram illustrating a configuration of the digital MFP 10 according to a preferred embodiment of the present invention.

As illustrated in Fig. 3, the digital MFP 10 includes a Micro Processor Unit (MPU) 111, a Read Only Memory (ROM) 112, and a Random Access Memory (RAM) 113. A microcomputer 110 is realized by the MPU 111, the ROM 112 and the RAM 113. The microcomputer 110 executes a program stored in the ROM 112 to control each component of the digital MFP 10, and realizes various functions of the digital MFP 10.

A flash memory 121 of the digital MFP 10 is a nonvolatile memory in which stored contents may be rewritten. The flash memory 121 stores various pieces of information that should be continuously stored. An image memory 122 of the digital MFP 10 stores an image to be processed by the digital MFP 10 in the form of image data.

The digital MFP 10 includes an image scanner unit 123 and an image printer unit 124. The image scanner unit 123 scans an image on an original document by a Charge Coupled Device (CCD) image sensor or the like. The image scanner unit 123 can scan an image on an original document by an Automatic Document Feeder (ADF) method or a Flat Bed Scanner (FBS) method. The image printer unit 124 forms an image on a printing medium by an electrophotographic method.

The digital MFP 10 includes an operation unit 125 and a display unit 126 as a user interface. The display unit 126 displays information in a visible form. The digital MFP 10 adopts a liquid crystal touch-screen display for the display unit 126. The display unit 126 partially functions as the operation unit 125.

A network interface 127 connects the digital MFP 10 and the LAN 50 by the Ethernet (registered trademark), for example.

A Network Control Unit (NCU) 128 and a Modulator Demodulator (MODEM) 129 are used for transmitting and receiving image data via the PSTN 91. The NCU 128 controls a connection established with the PSTN 91. The NCU 128 includes a function for transmitting a dial signal corresponding to a telephone number of a communication destination, and a function for detecting an incoming call. The MODEM 129 modulates transmission data and demodulates received data in accordance with V.17, V.27ter, V.29 or the like based on a facsimile transmission control protocol following the International Telecommunication Union-Telecommunications (ITU-T) recommendation T.30. Alternatively, the MODEM 129 modulates transmission data and demodulates received data in accordance with V.34.

Under the copy mode, the image scanner unit 123 scans an image on an original document, and generates image data relating to the scanned image. Then, the image printer unit 124 forms an image relating to the image data on a printing medium. Accordingly, an image is copied from the original document to the printing medium.

Under the fax mode, the image scanner unit 123 scans an image on the original document, and generates image data relating to the scanned image. Then, the image data is transmitted via the PSTN 91 to another fax machine by a G3 method or a super-G3 method. The digital MFP 10 receives image data transmitted from another fax machine via the PSTN 91 by the G3 method or the super-G3 method. Then, the image printer unit 124 forms an image relating to the image data on a printing medium.

Under the scanner mode, the image scanner unit 123 scans an image on the original document, and generates image data relating to the scanned image. Then, the digital MFP 10 stores the image data in a designated storage location.

Under the printer mode, the digital MFP 10 receives image data transmitted from the client computer 20 via the LAN 50, and the image printer unit 124 forms an image relating to the image data on a printing medium.

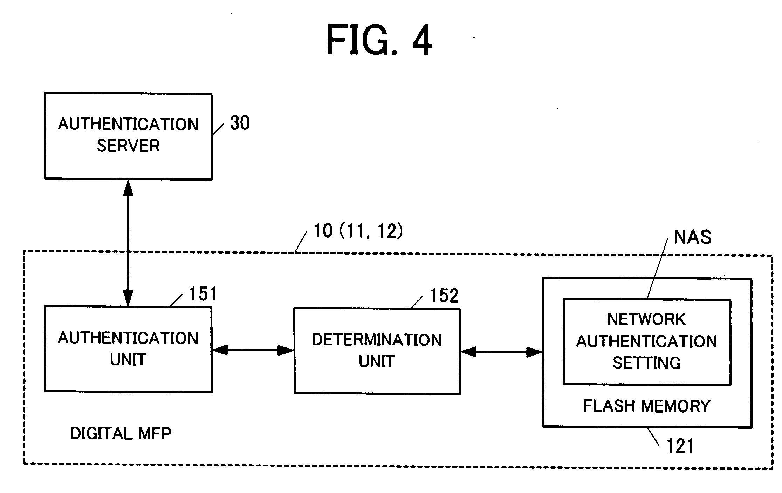

(3. Regarding restriction on offering of function) The digital MFP 10 offers a function called by an operation performed on the operation unit 125. For a part of the functions, a setting can be made such that the digital MFP 10 offers a function to only a previously permitted operator. In the following, with reference to Fig. 4 through Fig. 6, a description will be made of such a restriction on offering of the function.

(3.1 Configuration relating to restriction on offering of function) Fig. 4 is a block diagram illustrating a configuration of the digital MFP 10 relating to the restriction on offering of the function. A determination unit 152 and an authentication unit 152 of Fig. 4 are constituent elements that are realized by a program being executed by the microcomputer 110.

The authentication unit 151 of the digital MFP 10 carries out communication with the authentication server 30, and executes an authentication procedure. The authentication unit 151 acquires authentication information from an operator. The authentication unit 151 transmits an authentication request including the authentication information to the authentication server 30, and receives an authentication result from the authentication server 30.

The determination unit 152 determines whether or not to permit to offer a function called by an operation performed on the operation unit 125. For example, when a function switching key of the operation unit 125 is pressed and a fax transmission function is called, the determination unit 152 determines whether or not to permit to offer the called fax transmission function.

The flash memory 121 stores a network authentication setting NAS which designates necessity or non-necessity of the authentication procedure for each function.

(3.2 Editing of network authentication setting) When the authentication unit 151 executes the authentication procedure and the authentication succeeds, an editing can be made with respect to the network authentication setting NAS stored in the flash memory 121. Such a request for the authentication procedure is introduced to prevent the network authentication setting NAS from being edited by an inappropriate operator. As another example, instead of permitting all operators to edit the network authentication setting NAS when the authentication succeeds, a setting can be made to distinguish between an operator who is not permitted to edit the network authentication setting NAS even when the authentication succeeds and an operator (a system manager) who is permitted to edit the network authentication setting NAS when the authentication succeeds. In this case, the flash memory 121 previously stores an operator who will be permitted to edit the network authentication setting NAS, and the digital MFP 10 determines whether or not an operator is permitted to edit by referring to the registration. Accordingly, the digital MFP 10 can impose a restriction on the operator who will be permitted to edit the network authentication setting NAS. As a result, an inappropriate editing of the network authentication setting NAS can be prevented even more efficiently.

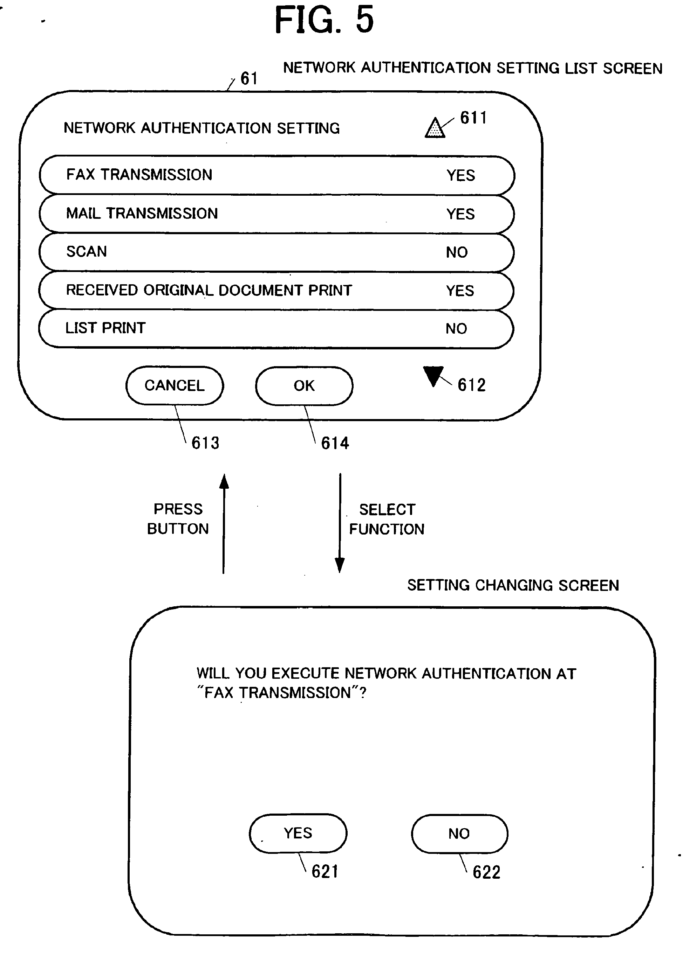

When the digital MFP 10 is switched to a network authentication setting changing mode, a network authentication setting list screen 61 and a setting changing screen 62 illustrated in Fig. 5 are called to the display unit 126.

The network authentication setting list screen 61 displays a list of functions which necessity or non-necessity of the authentication procedure is designated by the network authentication setting NAS (in Fig. 5, five functions: "fax transmission", "mail transmission", "scan", "received original document print" and "list print"). Due to the size of the display unit 126, the list of all functions, which necessity or non-necessity of the authentication procedure is designated, cannot be displayed in a single page of the network authentication setting list screen 61. Therefore, the list of the functions, which necessity or non-necessity of the authentication procedure is designated, is displayed over a plurality of pages which can be switched by page switching buttons 611 and 612.

To the right of each of the functions displayed as a list in the network authentication setting list screen 61, necessity or non-necessity of the authentication procedure for when offering each of the function is displayed. In Fig. 5, "YES" means that the authentication procedure is required when offering the function, and "NO" means that the authentication procedure is not required when offering the function.

When one function is selected from the network authentication setting list screen 61, the display unit 126 displays the setting changing screen 62 in place of the network authentication setting list screen 61. The setting changing screen 62 is a screen for changing a setting of necessity or non-necessity of the authentication for the selected function (in Fig. 5, "fax transmission").

The setting changing screen 62 includes an "YES" button 621 and a "NO" button 622. When the "YES" button 621 is selected in the setting changing screen 62, the selected function is set to be a function requiring the authentication procedure. Then, in place of the setting changing screen 62, the network authentication setting list screen 61 is called again to the display unit 126. Meanwhile, when the "NO" button 622 is selected in the setting changing screen 62, the selected function is set to be a function not requiring the authentication procedure. Then, in place of the setting changing screen 62, the network authentication setting list screen 61 is called again to the display unit 126.

A "cancel" button 613 of the network authentication setting list screen 61 is a button for canceling the change of the setting made from the setting changing screen 62. An "OK" button 614 is a button for actually reflecting the change of the setting made from the setting changing screen 62 on the network authentication setting NAS.

The editing of the network authentication setting NAS made from the network authentication setting list screen 61 and the setting changing screen 62 is one example of a method for facilitating the editing. The editing may be carried out by another method. For example, a pull-down menu may be introduced to the network authentication setting list screen 61, and the editing may be carried out just by the network authentication setting list screen 61.

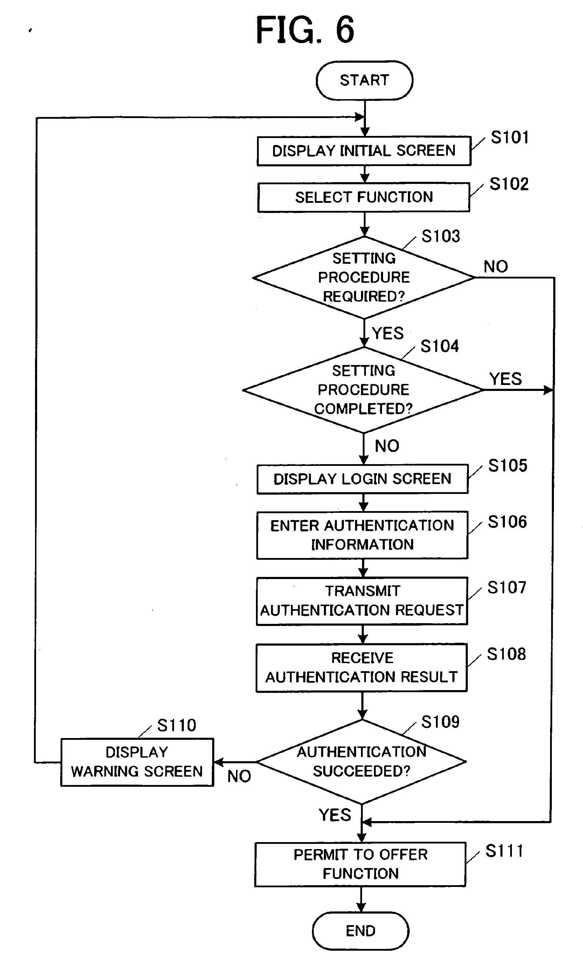

(3.3 Operation relating to restriction on offering of function) Fig. 6 is a flowchart illustrating an operation of the digital MFP 10 relating to the restriction on the offering of the function.

As illustrated in Fig. 6, when the digital MFP 10 starts the operation, the display unit 126 displays an initial screen including a message urging an operator to select a function, e.g. "Please select a function to be used" (step S101). Then, the operator selects a function (step S102).

Next, the determination unit 152 refers to the network authentication setting NAS, and checks whether or not the called (selected) function is a function requiring the authentication procedure (step S103).

When the called function is designated as a function not requiring the authentication procedure ("NO" at step S103), the determination unit 152 permits to offer the called function without having the authentication procedure being executed by the authentication unit 151 (step S111). Alternatively, even when the called function is designated as a function requiring the authentication procedure ("YES" at step S103), when the authentication procedure has already been completed, i.e., when the authentication procedure has been executed in the past but a procedure for terminating a state in which the authentication has succeeded (hereinafter "logout") has not been carried out ("YES" at step S104), the determination unit 152 permits to offer the called function without having the authentication procedure being executed by the authentication unit 151 (step S111).

When the called function is designated as a function requiring the authentication procedure ("YES" at step S103) but the authentication procedure has not been completed ("NO" at step S104), the authentication unit 151 executes the authentication procedure at step S105 through step S109. That is, the authentication unit 151 displays on the display unit 126 a login screen displaying a message urging an entry of authentication information, e.g. "Please enter user ID and password" (step S105). Then, the operator enters the authentication information (step S106). Furthermore, the authentication unit 151 transmits an authentication request including the acquired authentication information to the authentication server 30 (step S107). Then, the authentication unit 151 receives an authentication result from the authentication server 30 (step S108). When the authentication succeeds ("YES" at step S109), the authentication unit 151 permits to offer the called function (step S111). When the authentication fails ("NO" at step S109), the display unit 126 displays a warning screen including a message such as "Unusable" (step S110) for a prescribed period of time. Then, the process returns to step S101.

When the determination unit 152 permits to offer the called function, the digital MFP 10 is placed under a standby state. Then, according to an instruction of the operator made from the operation unit 125, a job relating to the called function becomes executable. For example, when the called function is "fax transmission", the digital MFP 10 becomes capable of transmitting a fax. An original document is set on the ADF or the FBS, and a start button (not illustrated) of the operation unit 125 is pressed. In response to the pressing operation, the fax transmission is carried out by the G3 method or the super-G3 method.

As a logout method, for example, instead of not logging out when a new function is called, the digital MFP 10 may logout when the operator performs a logout operation. Alternatively, the digital MFP 10 may logout when a new function is called.

If the digital MFP 10 is configured to logout when the operator performs a logout operation, after the authentication succeeds, until the logout operation is performed, the determination unit 152 permits to offer the called function without having the authentication procedure being executed by the authentication unit 151. In this case, the operator is not required to enter the authentication information each time when calling the function requiring the authentication procedure. Thus, it is possible to avoid troublesome.

If the digital MFP 10 is configured to logout when a new function is called, after the authentication succeeds, when a function designated in the network authentication setting NAS as a function requiring the authentication procedure is called, the authentication unit 151 executes the authentication procedure. After the authentication succeeds, the determination unit 151 permits to offer the called function. In this case, it is possible to even more reliably prevent the function requiring the authentication procedure from being offered to an operator other than the operator who has acquired the authentication information.

Further, the digital MFP 10 may automatically logout each time when a job is executed.

According to such a flow of the operation, although an authentication procedure is requested to an operator having a user ID and a password, such an operator can use all functions of the digital MFP 10. Meanwhile, an operator not having a user ID and a password can use a function that is set in the network authentication setting NAS as the function not requiring the authentication procedure.

Since the network authentication setting NAS is unique to each digital MFP 10, a function requiring the authentication procedure differs for each digital MFP 10 even for the same operator. When using the same digital MFP 10, the function requiring the authentication procedure is the same for different operators.

According to the above-described digital MFP 10, by appropriately editing the network authentication setting NAS, the function requiring the authentication procedure may be set appropriately. Since the network authentication setting NAS is stored in the flash memory 121 of each digital MFP 10, the function requiring the authentication procedure may be varied for the digital MFPs 11 and 12. Since the network authentication setting NAs is stored in the flash memory 121 of the digital MFP 10, information is not required to be transmitted and received between the digital MFP 10 and the authentication server 30 each time when a function is called. The authentication server 30 is just required to determine whether or not an authentication is necessary for the authentication request including the authentication information. That is, the digital MFP 10 can reduce a load imposed on a remote device for the authentication.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. A processing device with a plurality of functions, the processing device comprising:
an operation unit arranged to be operated;
a determination unit which determines whether or not to permit to offer a function called by an operation performed on the operation unit;
an authentication unit which executes an authentication procedure by acquiring authentication information from an operator, transmitting an authentication request including the authentication information to an authentication device, and receiving necessity or non-necessity of an authentication from the authentication device with respect to the authentication request; and
a storage unit which stores authentication necessity/non-necessity information designating necessity or non-necessity of the authentication procedure for each function in an editable form;
wherein when a function designated in the authentication necessity/non-necessity information as a function requiring the authentication procedure is called, the authenticating means executes the authentication procedure, and after the authentication succeeds, the determining means permits to offer the called function.

2. The processing device according to claim 1, wherein the authenticating means executes the authentication procedure prior to editing of the authentication necessity/non-necessity information, and after the authentication succeeds, the authentication necessity/non-necessity information becomes editable.

3. The processing device according to claim 2, wherein an operator permitted to edit the authentication necessity/non-necessity information is restricted to a specific operator.

4. The processing device according to claim 1, further comprising a display unit arranged to display information in a visible form,
wherein the display unit displays a list of functions which necessity or non-necessity of the authentication procedure is designated by the authentication necessity/non-necessity information, and when one function is selected from the displayed list of the functions, a designation of necessity or non-necessity of the authentication procedure can be switched for the selected function.

5. The processing device according to claim 4, wherein accompanying a setting of an authentication setting changing mode, the display unit displays the list.

6. The processing device according to claim 1, wherein after the authentication succeeds, until a procedure is carried out to terminate a state in which the authentication succeeded, the determining means permits to offer the called function without having the authentication procedure being executed by the authenticating means.

7. The processing device according to claim 1, wherein after the authentication succeeds, when the function designated in the authentication necessity/non-necessity information as the function requiring the authentication procedure is called, the authenticating means executes the authentication procedure, and after the authentication succeeds, the determining means permits to offer the called function.

8. The processing device according to claim 1, wherein the authenticating means executes an option process by transmitting a search request to the authentication device and receiving a search result including record information from the authentication device.

9. The processing device according to claim 1, wherein the functions include a fax transmission function.

10. The processing device according to claim 1, wherein the storing means stores common information for all users regarding necessity and non-necessity of the authentication.

11. A processing method of a processing device, which has a plurality of functions and includes a storing unit that stores authentication necessity/non-necessity information designating necessity or non-necessity of an authentication procedure for each function, the processing method comprising the steps of:
determining whether or not to permit to offer a function called by an operation performed on an operation unit, wherein when a function designated by the authentication necessity/non-necessity information as a function requiring the authentication procedure is called, an authentication procedure is executed, and after an authentication succeeds, the called function is permitted to be offered;
wherein the authentication procedure acquires authentication information from an operator, transmits an authentication request including the authentication information to an authentication device, and receives necessity or non-necessity of the authentication from the authentication device for the authentication request.

12. The processing method according to claim 11, wherein at the determining step, after the authentication succeeds, until a procedure is carried out to terminate a state in which the authentication succeeded, the called function is permitted to be offered without the authentication procedure being executed.

13. The processing method according to claim 11, wherein at the determining step, after the authentication succeeds, when the function designated in the authentication necessity/non-necessity information as the function requiring the authentication procedure is called, the authentication procedure is executed, and after the authentication succeeds, the called function is permitted to be offered.
